# EUROPEAN PATENT SPECIFICATION

(11) **EP 3 288 832 B1**
(45) Date of publication and mention of the grant of the patent: **25.09.2019**
(21) Application number: 16718694.9
(22) Date of filing: 27.04.2016
(51) Int. Cl.: B65B 7/28, G01N 35/04, G01N 35/10, G01N 1/00

(54) **RECAPPER, LABORATORY AUTOMATION SYSTEM AND METHOD OF RECAPPING A SAMPLE CONTAINER**
WIEDERVERSCHLIESSER, LABORAUTOMATISIERUNGSSYSTEM UND VERFAHREN ZUM WIEDERVERSCHLIESSEN VON PROBENBEHÄLTERN
RECAPUCHONNEUR, SYSTÈME D'AUTOMATISATION DE LABORATOIRE ET PROCÉDÉ DE RECAPUCHONNAGE D'UN RÉCIPIENT D'ÉCHANTILLON

(30) Priority: 27.04.2015 EP 15165249
(43) Date of publication of application: 07.03.2018
(73) Proprietor: Roche Diagnostics GmbH, 68305 Mannheim (DE); F. Hoffmann-La Roche AG, 4070 Basel (CH)
(72) Inventor: HEGEL, Markus, 71332 Waiblingen (DE)
(74) Representative: Patentanwälte Ruff, Wilhelm, Beier, Dauster & Partner mbB
(86) International application number: PCT/EP2016/059353
(87) International publication number: WO 2016/174060

(56) References cited:
- WO-A2-03/034038
- FR-A1- 2 653 408
- US-A- 3 755 987
- US-A- 4 816 110

## Description

### Applicable field and prior art

The invention relates to a recapper for placing foils on laboratory sample containers, to a laboratory automation system comprising such a recapper, and to a method of recapping a sample container.

Laboratory automation systems typically comprise a number of pre-analytical, analytical and/or post-analytical stations that are used to handle samples contained in sample containers. Such sample containers can, for example, be embodied as laboratory tubes. After a sample has been processed in a station, it is often desirable to place a foil or a cap on the sample container in order to prevent spilling of the sample out of the sample container and in order to prevent contamination.

For that purpose, so called recappers can be used that automatically (re) place and secure foils on sample containers. For example, US4816110 A1 describes a head assembly receiving the foils and rotating vertically between a foil magazine and the sample containers, and US3755987 A1 describes fingers rotating horizontally and pushing caps supported on a guiding arcuate groove between a cap transfer device and the sample containers. However, such recappers can be a bottleneck in a laboratory automation system, thus limiting throughput.

### Object and solution

It is an object of the invention to provide for a recapper that is adapted to operate with a high throughput, to provide for a laboratory automation system comprising such a recapper, and to provide for a method of recapping a sample container that is adapted for a high throughput.

This object is solved by a recapper according to claim 1, a laboratory automation system according to claim 12 and a method according to claim 13.

The invention relates to a recapper for (re) placing foils and/or caps on laboratory sample containers. The recapper comprises a foil magazine. The recapper further comprises a sample container holder being horizontally distant from the foil magazine, the sample container holder being adapted to hold a sample container. The sample container holder can be adapted to hold the sample container in an upright orientation and/or in a recapping position. The recapper further comprises a lever arrangement comprising a number (e.g. an integer multiple of 2) of levers, each lever having or comprising a respective foil transport element. The recapper further comprises a rotating device.

Each lever is attached to the rotating device such that with rotation of the rotating device, the lever rotates in a horizontally aligned plane. Especially, the respective lever rotates about a vertical axis. The respective lever rotates between a first orientation and a second orientation, wherein it should be noted that also further orientations (third, fourth ... orientation) are possible.

In the first orientation, the foil transport element of the lever is positioned at or located at (e.g. positioned below) the foil magazine for collecting a foil from the foil magazine, and in the second orientation the foil transport element of the lever is positioned at or located at (e.g. positioned above) the sample container holder to place the foil on the sample container.

With the inventive recapper, it is possible to significantly increase throughput compared to recappers known from the prior art. Especially, rotating levers can be operated significantly faster than linear transport mechanisms that are typically used in prior art recappers.

The inventive recapper may take out foils from the foil magazine and transport them to the sample container at high speed. Afterwards, the foil can be secured to the sample container. The same can be done with caps if they are contained in the foil magazine. Thus, the recapper can in general be used both with foils and with caps. It should be noted that whenever the word "foil" is used in the specification, the word "cap" could also have been used. The disclosure of this application thus comprises usage of foils and caps equally.

According to an embodiment, the foil magazine is positioned above the lever arrangement. The foils or caps contained in the foil magazine can thus easily be taken out in order to be positioned in the foil transport element by pulling it out of the magazine in a downward direction. Alternatively, the magazine can, for example, be adapted to let a foil fall out of the magazine.

According to an embodiment, a vacuum device is positioned below the lever arrangement, preferably straight below the foil magazine, for moving the foil from the foil magazine in a foil transport element placed below. Such a vacuum device may be adapted to be moved through the foil transport element to the foil magazine to abut the foil and to apply a vacuum to the foil for securing the foil to the vacuum device. The vacuum device may further be adapted to be lowered from the foil magazine in a position in which the foil is contained in the foil transport element and to release the foil by ceasing application of the vacuum.

With such a vacuum device, foils can easily be removed from the foil magazine and can be placed in the foil transport element of the respective lever.

The vacuum device may be driven by a link motion and/or by a spring. In particular, vertical motion of the vacuum device can be driven in such a way.

It should be noted that in a typical implementation the vacuum device penetrates through a hole in the lever that is defined by the respective foil transport element.

According to an embodiment, the rotating device is adapted to move the lever arrangement between an upper position and a lower position. In the upper position, the lever arrangement can rotate freely, wherein in the lower position the foil contained in a foil transport element abuts the sample container. With such an arrangement, a vertical distance between an upper side of a sample container on which the foil should be placed and a lower side of the foil magazine can be accounted for. Typically, a lever that has just loaded a foil below the foil magazine is rotated while being in the upper position such that the foil is positioned above the sample container, wherein the lever is subsequently lowered such that the foil abuts the sample container and can be secured to the sample container, for example by heating.

According to an embodiment, the sample container holder is positioned below the lever arrangement such that the sample container being held in the sample container holder is positioned below the lever arrangement. The sample container holder can be positioned such that a foil transport element of a lever is positioned above the sample container holder when the respective lever is in its second orientation.

According to an embodiment, a heating device is positioned above the lever arrangement and is operable to heat a foil after the foil has been brought into contact with the sample container by a lever. Such a heating device can be used in order to seal the sample container with the foil. It should, however, be noted that also other means for securing a foil on a sample container can be used, for example by using adhesives or by using positive connections.

According to an embodiment, the heating device is adapted to be moved between an upper position and a lower position, wherein in the lower position the heating device abuts a foil being in contact with a sample container being held in the sample container holder. Such an implementation can be used in order to allow free rotation of a lever when the heating device is in its upper position, and to allow sealing of a foil to a sample container by lowering the heating device. It should be noted that in a typical implementation, the heating device comprises a number of resistive heaters in order to heat the foil.

Each foil transport element is embodied as a through-hole extending vertically through a corresponding lever with a landing or step for holding the foil inside the through-hole. By means of such an arrangement, a foil can be taken out of the foil magazine and can be placed on the landing, especially during transport to the sample container. Typically, an inside part of the through-hole at and below the landing will also be free of any material, such that, for example, a vacuum device as discussed above can penetrate through the through-hole and can abut a foil being held in the foil magazine.

According to an embodiment, all fevers of the lever arrangement are arranged with equal angle between them in a horizontal plane. This can simplify construction and operation of the recapper.

According to an embodiment, the lever arrangement comprises a first lever and a second lever, wherein the first lever and the second lever are arranged with an angle of 180° between them in a horizontal plane. Such an arrangement with two levers has been proven suitable for a fast and reliable operation of the recapper. In such a case, the rotating device may especially be adapted to rotate the lever arrangement by an angle of 180°.

According to an embodiment, the rotating device is solely adapted to rotate the lever arrangement by a specific angle, preferably 180°, in both rotating directions. Usage of both rotating directions significantly simplifies construction of the rotating device, especially compared with implementations that require continuous rotational motion in one rotational direction.

According to an embodiment, the recapper comprises a foil magazine handling device being adapted to change and/or move the foil magazine. This can be used in order to automatically change the foil magazine. For example, in the case when a foil magazine is empty, a newly supplied foil magazine being fully loaded can be transported to the place where the empty foil magazine was placed before. The empty foil magazine can be removed. This allows an even higher degree of automation, thus minimizing need for manual operation.

According to an embodiment, the recapper comprises a sample container exchange device being adapted to exchange or replace a sample container being held in the sample container holder after recapping by another sample container. This can allow for automatic exchange of sample containers after a specific sample container has been sealed with a foil. Especially in this case, automatic operation can significantly increase throughput compared with manual operation.

The invention relates further to a laboratory automation system. The laboratory automation system comprises a number of pre-analytical, analytical and/or post-analytical stations. It further comprises a recapper according to the invention, the recapper being adapted to weld foils on sample containers containing samples that are to be processed or have been processed by one or more of the stations.

Pre-analytical stations may be adapted to perform any kind of pre-processing of samples, sample containers and/or sample container carriers.

Analytical stations may be adapted to use a sample or part of the sample and a reagent to generate a measuring signal, the measuring signal indicating if and in which concentration, if any, an analyte exists.

Post-analytical stations may be adapted to perform any kind of post-processing of samples, sample containers and/or sample container carriers.

It should be noted that all embodiments, implementations or other details as discussed herein with respect to the inventive recapper can also be applied to the recapper of the inventive laboratory automation system.

The pre-analytical, analytical and/or post-analytical stations may comprise at least one of a decapping station, a recapping station, an aliquot station, a centrifugation station, an archiving station, a pipetting station, a sorting station, a tube type identification station, and a sample quality determining station.

The invention relates further to a method of recapping a sample container. Preferably, the method is performed using a recapper according to the invention, wherein all implementations and variations as discussed herein can be applied. The method comprises the following steps:
- taking a foil out of a foil magazine, preferably by a vacuum device,
- putting the foil in a foil transport element of a lever,
- rotating the lever such that the foil is positioned over the sample container,
- moving the lever down such that the foil abuts the sample container, and
- welding the foil on the sample container, preferably by a heating device.

The method just described provides for a fast and efficient recapping of sample containers, especially in a laboratory automation system. It should be noted that all embodiments, implementations or other details as discussed herein with respect to the inventive recapper can also be applied to the inventive method. Furthermore, all embodiments, implementations or details disclosed with respect to the inventive method can also be applied for the inventive recapper.

According to an embodiment, the method includes a step of moving the lever up before it is rotated. Especially, the lever can be moved up from the sample container after having placed a foil on the sample container. This typically allows free movement of the lever.

The lever can be part of a lever arrangement as discussed above. Especially, the lever arrangement may comprise two levers being arranged with an angle of 180° in between, and a rotating device may be used in order to rotate the levers by 180° in both directions.

The invention relates further to a recapper with a control unit, the control unit being configured to perform a method as just described. The recapper may be a recapper according to the invention. With regard to the recapper and the method, all embodiments, variations and details as discussed herein can be applied.

The control unit can especially comprise processor means and storage means, wherein program code is stored in the storage means that causes the processor means to perform a specific method when executed by the processor means.

### Brief description of the drawing

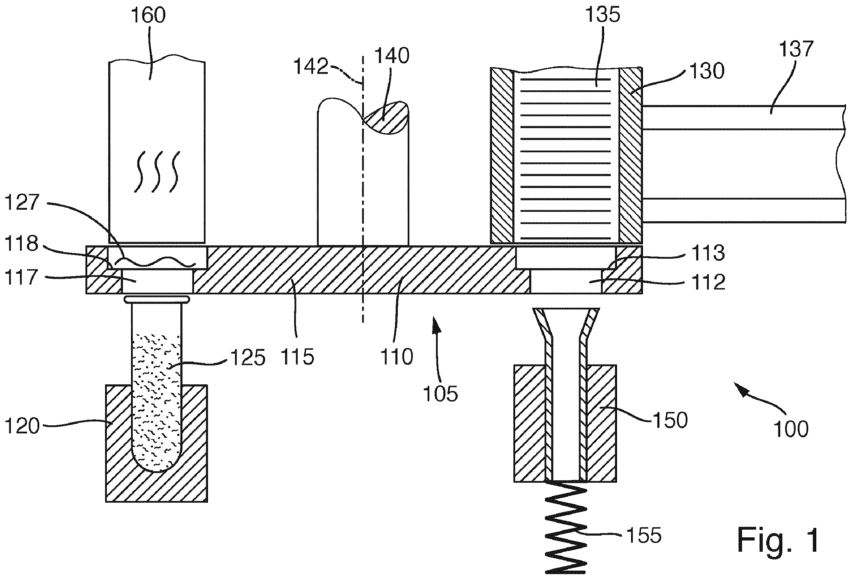

Further details and advantages will be apparent from the following description of an embodiment which is given with respect to the enclosed drawing, in which fig. 1 shows a recapper according to the invention.

### Detailed description of the embodiment

Fig. 1 shows a recapper 100. The recapper 100 comprises a lever arrangement 105 having or comprising a first lever 110 and a second lever 115. The first lever 110 and the second lever 115 are arranged horizontally and with an angle of 180° between them.

The levers 110, 115 abut each other just below a rotating device 140, wherein the rotating device 140 is adapted to rotate both levers 110, 115 horizontally about a vertical axis 142.

The rotating device 140 is shown as a vertical rod in fig. 1 for the purpose of simplification, wherein it should be understood that the rotating device 140 will typically have a drive means such as an electric motor that is not shown in fig. 1.

Below the lever arrangement 105, there is arranged a sample container holder 120 in which a sample container 125 is held. The sample container 125 is shown exemplarily for a sample container on which a foil should be placed. The sample container 125 is partially filled with a sample.

In the first lever 110, there is arranged a first foil transport element 112. Similarly, there is arranged a second foil transport element 117 in the second lever 115. The both foil transport elements 112, 117 are similarly embodied as through-holes with a respective step 113, 118 in the vertical middle of the respective lever 110, 115. This allows a foil to be placed on the step 113, 118, while the foil can be loaded from above and can be unloaded from below the respective lever 110, 115. Exemplarily, there is shown a foil 127 in the second transport element 117.

Above the lever arrangement 105, there is arranged a foil magazine 130. The foil magazine 130 stores a plurality of foils 135 that are to be used for recapping sample containers. The foil magazine 130 can be replaced by a foil magazine handling means 137 such that a new foil magazine can be installed in case the foil magazine 130 is empty. The foil magazine handling means 137 is only shown schematically in fig. 1.

Below the lever arrangement 105 and vertically straight below the foil magazine 130 there is arranged a vacuum device 150 that is placed on an elevation means 155. The elevation means 155 allows the vacuum device 150 to be moved in the vertical direction just below the foil magazine 130.

Starting from the position shown in fig. 1, the vacuum device 150 can be moved up until it abuts a foil 135 in the foil magazine 130. Then, a vacuum is activated such that the foil 135 is secured to the vacuum device 150. The vacuum device 150 then moves down until the foil 135 lies on the step 113 of the first foil transport element 112. Then, the vacuum is deactivated and the vacuum device 150 moves further down below the lever arrangement 105. With such a process, a foil 135 has been taken out of the foil magazine 130 and has been placed into the foil transport element 112 for transporting the respective foil 135 to the sample container 125.

After having placed a foil into one of the foil transport elements 112, 117, the lever arrangement 105 is rotated by 180° using the rotating device 140. Then, this foil is in a position as shown with the foil 127 in fig. 1.

Above the lever arrangement 105 and vertically straight above the sample container holder 120, there is arranged a heating device 160. The heating device 160 can be used in order to secure a foil on the sample container 125 by means of heat.

The rotation device 140 is further adapted to move the lever arrangement 105 in the vertical direction. Especially, starting from the state shown in fig. 1, it is possible to lower the lever arrangement 105 such that the foil 127 that is shown here in the second foil transport element 117 abuts the sample container 125 from above. Afterwards, the heating device 160 heats up the foil 127 on the sample container 125 such that the foil 127 is secured to the sample container 125 by means of heat.

After each such an operation of placing a foil 127 on a sample container 125, the lever arrangement 105 is moved up again, a new foil 135 is taken out of the foil magazine 130, is brought to the sample container 125 and is secured in the same way as just described. It should be noted that each of the foil transport elements 112, 117 can be loaded with a foil 127, 135 every time the respective foil transport element 112, 117 is moved from the foil magazine 130 to the sample container 125. This allows for a very high throughput.

The recapper 100 thus allows for a reliable and fast recapping of sample containers 125 with respective foils 127, wherein each recapping step only takes a very short amount of time. The sample container 125 can be exchanged by a sample container exchanging means that is not shown in fig. 1 such that an automatic operation in recapping of sample containers is permitted.

## Claims

1. Recapper (100) for placing foils (127, 135) on laboratory sample containers (125), wherein the recapper (100) comprises:
- a foil magazine (130),
- a sample container holder (120) being distant from the foil magazine (130), the sample container holder (120) being adapted to hold a sample container (125),
- a lever arrangement (105) comprising a number of levers (110, 115), each lever (110, 115) comprising a respective foil transport element (112, 117), and
- a rotating device (140),
- wherein each lever (110, 115) is attached to the rotating device (140) such that with rotation of the rotating device (140) the lever (110, 115) rotates between a first orientation and a second orientation,
- wherein in the first orientation the foil transport element (112, 117) of the lever (110, 115) is positioned at the foil magazine (130) for collecting a foil (127, 135) from the foil magazine (130), and
- wherein in the second orientation the foil transport element (112, 117) of the lever (110, 115) is positioned at the sample container holder (120) to place the foil (127, 135) on the sample container (125),
**characterized in that**
- the sample container holder (120) is horizontally distant from the foil magazine (130),
- wherein each foil transport element (112, 117) is embodied as a through-hole extending vertically through a corresponding lever (110, 115) with a landing (113, 118) for holding the foil (127, 135) inside the through-hole, and
- wherein each lever (110, 115) is attached to the rotating device (140) such that with rotation of the rotating device (140) the lever (110, 115) rotates horizontally between the first orientation and the second orientation.

2. Recapper (100) according to claim 1,
**characterized in that**
- the foil magazine (130) is positioned above the lever arrangement (105).

3. Recapper (100) according to one of the preceding claims,
**characterized in that**
- a vacuum device (150) is positioned below the lever arrangement (105), preferably straight below the foil magazine (130), for moving the foil (127, 135) from the foil magazine (130) in a foil transport element (112, 117).

4. Recapper (100) according to claim 3,
**characterized in that**
- the vacuum device (150) is adapted to be moved through the foil transport element (112, 117) to the foil magazine (130) to abut the foil (127, 135) and to apply a vacuum to the foil (127, 135) for securing the foil (127, 135) to the vacuum device (150), and
- the vacuum device (150) is adapted to be moved down from the foil magazine (130) in a position in which the foil (127, 135) is contained in the foil transport element (112, 117) and to release the foil (127, 135) by ceasing application of the vacuum.

5. Recapper (100) according to one of the preceding claims,
**characterized in that**
- the rotating device (140) is adapted to vertically move the lever arrangement (105) between an upper position and a lower position,
- wherein in the upper position the lever arrangement (105) can rotate freely, and
- wherein in the lower position the foil (127, 135) contained in a foil transport element (112, 117) abuts a sample container (125).

6. Recapper (100) according to one of the preceding claims,
**characterized in that**
- the sample container holder (120) is positioned below the lever arrangement (105) such that the sample container (125) being held in the sample container holder (120) is positioned below the lever arrangement (105).

7. Recapper (100) according to one of the preceding claims,
**characterized in that**
- a heating device (160) is positioned above the lever arrangement (105) and is operable to heat a foil (127, 135) after the foil (127, 135) has been brought into contact with a sample container (125) by a lever (110, 115).

8. Recapper (100) according to claim 7,
**characterized in that**
- the heating device (160) is adapted to be vertically moved between an upper position and a lower position,
- wherein in the lower position the heating device (160) abuts a foil (127, 135) being in contact with a sample container (125) being held in the sample container holder (120).

9. Recapper (100) according to one of the preceding claims,
**characterized in that**
- all levers (110, 115) of the lever arrangement (105) are arranged with equal angle between them in a horizontal plane.

10. Recapper (100) according to one of the preceding claims,
**characterized in that**
- the lever arrangement (105) comprises a first lever (110) and a second lever (115),
- wherein the first lever (110) and the second lever (115) are arranged with an angle of 180° between them in a horizontal plane.

11. Recapper (100) according to one of the preceding claims,
**characterized in that**
- the rotating device (140) is solely adapted to rotate the lever arrangement (105) by a specific angle, preferably 180°, in both rotating directions.

12. Laboratory automation system, comprising:
- a number of pre-analytical, analytical and/or post-analytical stations, and
- a recapper (100) according to one of the preceding claims, the recapper (100) being adapted to weld foils (127, 135) on sample containers (125) containing samples that are to be processed or have been processed by one or more of the stations.

13. A method of recapping a sample container (125) using a recapper (100) according to one of claims 1 to 11, the method comprising the following steps:
- taking a foil (127, 135) out of a foil magazine (130), preferably by means of a vacuum device (150),
- inserting the foil (127, 135) in a foil transport element (112, 117) of a lever (110, 115),
- rotating the lever (110, 115) such that the foil (127, 135) is positioned over the sample container (125),
- lowering the lever (110, 115) such that the foil (127, 135) abuts the sample container (125), and
- welding the foil (127, 135) on the sample container (125), preferably by means of a heating device (160).

## Patentansprüche

1. Wiederverschließeinrichtung (100) zum Anbringen von Folien (127, 135) auf Laborprobenbehältern (125), wobei die Wiederverschließeinrichtung (100) aufweist:
- ein Folienmagazin (130),
- einen Probenbehälterhalter (120), der entfernt vom Folienmagazin (130) angeordnet ist, wobei der Probenbehälterhalter (120) dazu ausgebildet ist, dass er einen Probenbehälter (125) hält,
- eine Hebelanordnung (105), aufweisend eine Anzahl von Hebeln (110, 115), wobei jeder Hebel (110, 115) ein zugehöriges Folientransportelement (112, 117) aufweist, und
- eine Rotationseinrichtung (140),
- wobei jeder Hebel (110, 115) an der Rotationseinrichtung (140) derart befestigt ist, dass mit Drehung der Rotationseinrichtung (140) der Hebel (110, 115) sich zwischen einer ersten Orientierung und einer zweiten Orientierung dreht,
- wobei in der ersten Orientierung das Folientransportelement (112, 117) des Hebels (110, 115) am Folienmagazin (130) positioniert ist, um eine Folie (127, 135) vom Folienmagazin (130) aufzunehmen, und
- wobei in der zweiten Orientierung das Folientransportelement (112, 117) des Hebels (110, 115) am Probenbehälterhalter (120) positioniert ist, um die Folie (127, 135) auf den Probenbehälter (125) anzubringen,
**dadurch gekennzeichnet, dass**
- der Probenbehälterhalter (120) horizontal entfernt vom Folienmagazin (130) angeordnet ist,
- wobei jedes Folientransportelement (112, 117) als Durchgangsöffnung ausgebildet ist, die sich vertikal durch einen zugehörigen Hebel (110, 115) erstreckt, und eine Anlegestelle (113, 118) zum Halten der Folie (127, 135) im Inneren der Durchgangsöffnung aufweist, und
- wobei jeder Hebel (110, 115) an der Rotationseinrichtung (140) derart befestigt ist, dass mit einer Drehung der Rotationseinrichtung (140) der Hebel (110, 115) sich zwischen der ersten Orientierung und der zweiten Orientierung horizontal dreht.

2. Wiederverschließeinrichtung (100) nach Anspruch 1, **dadurch gekennzeichnet, dass**
- das Folienmagazin (130) über der Hebelanordnung (105) positioniert ist.

3. Wiederverschließeinrichtung (100) nach einem der vorhergehenden Ansprüche, **dadurch gekennzeichnet, dass**
- eine Vakuumeinrichtung (150) unter der Hebelanordnung (105) positioniert ist, vorzugsweise direkt unter dem Folienmagazin (130), zum Bewegen der Folie (127, 135) vom Folienmagazin (130) in ein Folientransportelement (112, 117).

4. Wiederverschließeinrichtung (100) nach Anspruch 3, **dadurch gekennzeichnet, dass**
- die Vakuumeinrichtung (150) dazu ausgebildet ist, dass sie durch das Folientransportelement (112, 117) zum Folienmagazin (130) bewegt wird, so dass sie auf die Folie (127, 135) trifft und an die Folie (127, 135) ein Vakuum anlegt, das die Folie (127, 135) an der Vakuumeinrichtung (150) sichert, und
- die Vakuumeinrichtung (150) dazu ausgebildet ist, dass sie vom Folienmagazin (130) nach unten in eine Position bewegt wird, in der die Folie (127, 135) im Folientransportelement (112, 117) enthalten ist, und die Folie (127, 135) durch Aufheben des angelegten Vakuums freigibt.

5. Wiederverschließeinrichtung (100) nach einem der vorhergehenden Ansprüche, **dadurch gekennzeichnet, dass**
- die Rotationseinrichtung (140) dazu ausgebildet ist, dass sie die Hebelanordnung (105) zwischen einer oberen Position und einer unteren Position vertikal bewegt,
- wobei in der oberen Position die Hebelanordnung (105) frei drehbar ist, und
- wobei in der unteren Position die in einem Folientransportelement (112, 117) enthaltene Folie (127, 135) auf einen Probenbehälter (125) trifft.

6. Wiederverschließeinrichtung (100) nach einem der vorhergehenden Ansprüche, **dadurch gekennzeichnet, dass**
- der Probenbehälterhalter (120) unter der Hebelanordnung (105) derart positioniert ist, dass der im Probenbehälterhalter (120) gehaltene Probenbehälter (125) unter der Hebelanordnung (105) positioniert ist.

7. Wiederverschließeinrichtung (100) nach einem der vorhergehenden Ansprüche, **dadurch gekennzeichnet, dass**
- eine Heizeinrichtung (160) über der Hebelanordnung (105) positioniert ist, die derart betreibbar ist, dass sie eine Folie (127, 135) erwärmt, nachdem die Folie (127, 135) durch einen Hebel (110, 115) mit einem Probenbehälter (125) in Kontakt gebracht wurde.

8. Wiederverschließeinrichtung (100) nach Anspruch 7, **dadurch gekennzeichnet, dass**
- die Heizeinrichtung (160) dazu ausgebildet ist, zwischen einer oberen Position und einer unteren Position vertikal bewegt zu werden,
- wobei in der unteren Position die Heizeinrichtung (160) auf eine Folie (127, 135) trifft, die mit einem im Probenbehälterhalter (120) gehaltenen Probenbehälter (125) in Kontakt steht.

9. Wiederverschließeinrichtung (100) nach einem der vorhergehenden Ansprüche, **dadurch gekennzeichnet, dass**
- alle Hebel (110, 115) der Hebelanordnung (105) mit einem gleichen Winkelabstand dazwischen in einer horizontalen Ebene angeordnet sind.

10. Wiederverschließeinrichtung (100) nach einem der vorhergehenden Ansprüche, **dadurch gekennzeichnet, dass**
- die Hebelanordnung (105) einen ersten Hebel (110) und einen zweiten Hebel (115) aufweist,
- wobei der erste Hebel (110) und der zweite Hebel (115) mit einem Winkel von 180° dazwischen in einer horizontalen Ebene angeordnet sind.

11. Wiederverschließeinrichtung (100) nach einem der vorhergehenden Ansprüche, **dadurch gekennzeichnet, dass**
- die Rotationseinrichtung (140) nur dazu ausgebildet ist, die Hebelanordnung (105) um einen bestimmten Winkel, bevorzugt 180°, in beide Drehrichtungen zu drehen.

12. Laborautomatisierungssystem, aufweisend:
- eine Anzahl von prä-analytischen, analytischen und/oder post-analytischen Stationen, und
- eine Wiederverschließeinrichtung (100) nach einem der vorhergehenden Ansprüche, wobei die Wiederverschließeinrichtung (100) dazu ausgebildet ist, dass sie Folien (127, 135) auf Probenbehälter (125) schweißt, die Proben enthalten, die von einer oder mehreren der Stationen zu verarbeiten sind oder von ihnen bearbeitet wurden.

13. Verfahren zum Wiederverschließen eines Probenbehälters (125) unter Verwendung einer Wiederverschließeinrichtung (100) nach einem der Ansprüche 1 bis 11, wobei das Verfahren die folgenden Schritte aufweist:
- Entnehmen einer Folie (127, 135) aus einem Folienmagazin (130), vorzugsweise mittels einer Vakuumeinrichtung (150),
- Einsetzen der Folie (127, 135) in ein Folientransportelement (112, 117) eines Hebels (110, 115),
- Drehen des Hebels (110, 115) derart, dass die Folie (127, 135) über den Probenbehälter (125) positioniert wird,
- Absenken des Hebels (110, 115) derart, dass die Folie (127, 135) auf den Probenbehälter (125) trifft, und
- Aufschweißen der Folie (127, 135) auf den Probenbehälter (125), vorzugsweise mittels einer Heizeinrichtung (160).

## Revendications

1. Recapuchonneur (100) pour placer des feuilles (127, 135) sur des récipients d'échantillon de laboratoire (125), le recapuchonneur (100) comprenant :
un magasin de feuilles (130),
un porte-récipient d'échantillon (120) distant du magasin de feuilles (130), le porte-récipient d'échantillon (120) étant conçu pour tenir un récipient d'échantillon (125),
un agencement de levier (105) comprenant un certain nombre de leviers (110, 115), chaque levier (110, 115) comprenant un élément de transport de feuille (112, 117) respectif, et
un dispositif rotatif (140),
chaque levier (110, 115) étant fixé au dispositif rotatif (140) de sorte qu'avec la rotation du dispositif rotatif (140) le levier (110, 115) tourne entre une première orientation et une seconde orientation,
dans la première orientation, l'élément de transport de feuille (112, 117) du levier (110, 115) étant positionné sur le magasin de feuilles (130) pour collecter une feuille (127, 135) du magasin de feuilles (130), et
dans la seconde orientation, l'élément de transport de feuille (112, 117) du levier (110, 115) étant positionné sur le porte-récipient d'échantillon (120) pour placer la feuille (127, 135) sur le récipient d'échantillon (125),
**caractérisé en ce que**
le porte-récipient d'échantillon (120) est horizontalement distant du magasin de feuilles (130),
chaque élément de transport de feuille (112, 117) étant réalisé sous la forme d'un trou traversant s'étendant verticalement à travers un levier (110, 115) correspondant avec un palier (113, 118) pour tenir la feuille (127, 135) à l'intérieur du trou traversant, et
chaque levier (110, 115) étant fixé au dispositif rotatif (140) de sorte qu'avec la rotation du dispositif rotatif (140) le levier (110, 115) tourne horizontalement entre la première orientation et la seconde orientation.

2. Recapuchonneur (100) selon la revendication 1, **caractérisé en ce que**
le magasin de feuilles (130) est positionné au-dessus de l'agencement de levier (105).

3. Recapuchonneur (100) selon l'une quelconque des revendications précédentes, **caractérisé en ce que**
un dispositif à vide (150) est positionné en dessous de l'agencement de levier (105), de préférence directement en dessous du magasin de feuilles (130), pour déplacer la feuille (127, 135) du magasin de feuilles (130) dans un élément de transport de feuille (112, 117).

4. Recapuchonneur (100) selon la revendication 3, **caractérisé en ce que**
le dispositif à vide (150) est conçu pour être déplacé à travers l'élément de transport de feuille (112, 117) vers le magasin de feuilles (130) pour venir en butée contre la feuille (127, 135) et pour appliquer un vide à la feuille (127, 135) pour fixer la feuille (127, 135) au dispositif à vide (150), et
le dispositif à vide (150) est conçu pour être déplacé vers le bas à partir du magasin de feuilles (130) dans une position dans laquelle la feuille (127, 135) est contenue dans l'élément de transport de feuille (112, 117) et pour libérer la feuille (127, 135) en cessant l'application du vide.

5. Recapuchonneur (100) selon l'une quelconque des revendications précédentes, **caractérisé en ce que**
le dispositif rotatif (140) est conçu pour déplacer verticalement l'agencement de levier (105) entre une position supérieure et une position inférieure,
dans la position supérieure, l'agencement de levier (105) pouvant tourner librement, et
dans la position inférieure, la feuille (127, 135) contenue dans un élément de transport de feuille (112, 117) venant en butée contre un récipient d'échantillon (125).

6. Recapuchonneur (100) selon l'une quelconque des revendications précédentes, **caractérisé en ce que**
le porte-récipient d'échantillon (120) est positionné en dessous de l'agencement de levier (105) de sorte que le récipient d'échantillon (125) maintenu dans le porte-récipient d'échantillon (120) soit positionné en dessous de l'agencement de levier (105).

7. Recapuchonneur (100) selon l'une quelconque des revendications précédentes, **caractérisé en ce que**
un dispositif de chauffage (160) est positionné au-dessus de l'agencement de levier (105) et permet de chauffer une feuille (127, 135) après que la feuille (127, 135) a été mise en contact avec un récipient d'échantillon (125) par un levier (110, 115).

8. Recapuchonneur (100) selon la revendication 7, **caractérisé en ce que**
le dispositif de chauffage (160) est conçu pour être déplacé verticalement entre une position supérieure et une position inférieure,
dans la position inférieure, le dispositif de chauffage (160) venant en butée contre une feuille (127, 135) en contact avec un récipient d'échantillon (125) maintenu dans le porte-récipient d'échantillon (120).

9. Recapuchonneur (100) selon l'une quelconque des revendications précédentes, **caractérisé en ce que**
tous les leviers (110, 115) de l'agencement de levier (105) sont disposés avec un angle égal entre eux dans un plan horizontal.

10. Recapuchonneur (100) selon l'une quelconque des revendications précédentes, **caractérisé en ce que**
l'agencement de levier (105) comprend un premier levier (110) et un second levier (115),
le premier levier (110) et le second levier (115) étant disposés avec un angle de 180° entre eux dans un plan horizontal.

11. Recapuchonneur (100) selon l'une quelconque des revendications précédentes, **caractérisé en ce que**
le dispositif rotatif (140) est uniquement conçu pour faire tourner l'agencement de levier (105) d'un angle spécifique, de préférence de 180°, dans les deux sens de rotation.

12. Système d'automatisation de laboratoire, comprenant :
un certain nombre de stations pré-analytiques, analytiques et/ou post-analytiques, et
un recapuchonneur (100) selon l'une des revendications précédentes, le recapuchonneur (100) étant conçu pour souder des feuilles (127, 135) sur des récipients d'échantillon (125) contenant des échantillons qui doivent être traités ou ont été traités par au moins une station.

13. Procédé de recapuchonnage d'un récipient d'échantillon (125) à l'aide d'un recapuchonneur (100) selon l'une des revendications 1 à 11, le procédé comprenant les étapes consistant à :
prendre une feuille (127, 135) dans un magasin de feuilles (130), de préférence au moyen d'un dispositif à vide (150),
insérer la feuille (127, 135) dans un élément de transport de feuille (112, 117) d'un levier (110, 115),
tourner le levier (110, 115) de sorte que la feuille (127, 135) soit positionnée sur le récipient d'échantillon (125),
abaisser le levier (110, 115) de sorte que la feuille (127, 135) vienne en butée contre le récipient d'échantillon (125), et
souder la feuille (127, 135) sur le récipient d'échantillon (125), de préférence au moyen d'un dispositif de chauffage (160).
